# EUROPEAN PATENT APPLICATION

(11) **EP 2 481 613 A1**
(43) Date of publication of application: **01.08.2012**
(21) Application number: 11196034.0
(22) Date of filing: 29.12.2011
(51) Int. Cl.: B60C 23/04

(54) **Position detecting apparatus**

(30) Priority: 01.02.2011 JP 2011019567
(71) Applicant: Alps Electric Co., Ltd., Tokyo 145-8501 (JP)
(72) Inventor: Nakasato, Mitsuharu, Tokyo, Tokyo 145-8501 (JP); Nonaka, Kaiji, Tokyo, Tokyo 145-8501 (JP)
(74) Representative: Klunker, Hans-Friedrich

(57) **Abstract**

A first transmitting antenna (25) is disposed so as to allow communication in a first range (30) accommodating a transmitting and receiving unit (11) attached to a first wheel and a transmitting and receiving unit (10) attached to a second wheel. A second transmitting antenna (26) is disposed so as to allow communication in a second range (31) that accommodates the transmitting and receiving unit (11) attached to the first wheel and does not accommodate the transmitting and receiving unit (10) attached to the second wheel. A controller (21) associates an identification code of the transmitting and receiving unit (11), which has received request signals from the first and second transmitting antennas (25) and (26) and has transmitted response signals, with a region shared by the first and second ranges (30) and (31), and associates an identification code, assigned to the transmitting and receiving unit (10), other than the identification code associated with the region with a region inside the first range (30) and outside the second range (31).

## Description

### BACKGROUND OF THE INVENTION

### 1. Field of the Invention

The present invention relates to position detecting apparatuses for determining the position of a transmitting and receiving unit attached to a wheel of a vehicle, and in particular, relates to a position detecting apparatus that determines the position of a transmitting and receiving unit on the basis of the difference in communication range between a plurality of transmitting antennas provided for a vehicle.

### 2. Description of the Related Art

It is important for a vehicle, such as an automobile, to properly maintain air pressure in each tire constituting a wheel. Systems have been used which perform an operation of monitoring air pressure to give an alarm when the air pressure is at or below a predetermined value. In this case, a transmitting and receiving unit having a function of detecting air pressure is attached to each wheel of a vehicle, and a vehicle device for communicating with the transmitting and receiving unit attached to each wheel via radio waves is provided for the vehicle. Communication between each transmitting and receiving unit and the vehicle device allows information given by the unit attached to each wheel to be processed on the vehicle.

The vehicle is provided with at least four wheels. In the case where an alarm will be given if air pressure in any one of tires is reduced, it is unnecessary to determine the transmitting and receiving unit relevant to the tire (wheel), namely, which transmitting and receiving unit has transmitted a signal indicating a reduction in air pressure. In order to determine which tire has a reduced air pressure and then raise an alarm, it is necessary to determine the position of the transmitting and receiving unit which has transmitted a signal indicating a reduction in air pressure.

A system for detecting the position of a transmitting and receiving unit has been known which assigns a unique identification code to each transmitting and receiving unit and data regarding the relationship between the identification codes and the positions of the wheels to which the transmitting and receiving units are attached is stored in the vehicle. In this system, when tires are rotated and their positions are changed, the data regarding the relationship between the identification codes and the positions has to be updated. According to another known system, data regarding the relationship between each transmitting and receiving unit and its position is updated each time an ignition switch is switched from an OFF state to an ON state to start the engine, because updating requires time and effort. Specifically, the vehicle transmits front-wheel request signals and rear-wheel request signals to the transmitting and receiving units. Each transmitting and receiving unit receives the request signal, determines whether the unit is associated with a front wheel or a rear wheel, and determines on the basis of an intensity of the request signal whether the associated wheel is a left or right wheel. Consequently, the transmitting and receiving unit specifies the position of the tire to which the unit is attached and stores the specified position. The transmitting and receiving unit then transmits a signal indicating the stored position of the tire and ID data assigned to the unit. The vehicle associates the ID data items of the transmitting and receiving units with the positions of the tires on the basis of the received signals. Japanese Unexamined Patent Application Publication No. 2008-149832 discloses such a position detecting apparatus.

### SUMMARY OF THE INVENTION

In related-art position detecting apparatuses, however, since each transmitting and receiving unit requires a circuit for determining the position of the corresponding tire, the flexibility of design is impaired and processing is complicated.

The present invention has been made in consideration of the above-described problems and provides a position detecting apparatus capable of specifying the position of a transmitting and receiving unit by easy processing with high design flexibility.

The present invention provides a position detecting apparatus including transmitting and receiving units attached to at least two wheels of a vehicle, respectively, and a vehicle device provided for the vehicle, the vehicle device and the transmitting and receiving unit attached to each wheel communicating with each other via radio waves. The vehicle device includes a receiver for receiving signals from the transmitting and receiving units, a plurality of transmitting antennas for allowing communication in predetermined ranges, respectively, a memory for storing identification codes uniquely assigned to the respective transmitting and receiving units, and a controller for permitting the transmitting antennas to transmit signals and determining the positions of the transmitting and receiving units on the basis of signals received by the receiver. A first transmitting antenna, which is one of the transmitting antennas, is disposed so as to allow communication in a first range that accommodates the transmitting and receiving unit attached to a first wheel and the transmitting and receiving unit attached to a second wheel. A second transmitting antenna, which is one of the transmitting antennas, is disposed so as to allow communication in a second range that accommodates the transmitting and receiving unit attached to the first wheel and does not accommodate the transmitting and receiving unit attached to the second wheel. The controller permits each of the transmitting antennas to transmit a request signal. Each transmitting and receiving unit which has received the request signal transmits a response signal containing information indicative of the identification code of the transmitting and receiving unit. The controller associates the identification code of the transmitting and receiving unit, which has received the request signals from the first and second transmitting antennas and has transmitted the response signals, of the transmitting and receiving units which have received the request signal from the first transmitting antenna and have transmitted the response signals, respectively, with a region shared by the first and second ranges, and associates the identification code other than the identification code associated with the region with a region inside the first range and outside the second range.

In this position detecting apparatus, the transmitting and receiving units may be attached to a left front wheel, a left rear wheel, a right front wheel, and a right rear wheel, serving as four wheels of the vehicle, respectively. The first transmitting antenna may be disposed so as to allow communication in the first range that accommodates the transmitting and receiving units attached to the left front and left rear wheels of the vehicle. The second transmitting antenna may be disposed so as to allow communication in the second range that accommodates the transmitting and receiving units attached to the left rear and right rear wheels of the vehicle. A third transmitting antenna, which is one of the transmitting antennas, may be disposed so as to allow communication in a third range that accommodates the transmitting and receiving units attached to the right front and right rear wheels of the vehicle. The controller may associate the identification code of the transmitting and receiving unit, which has received the request signals from the first and second transmitting antennas and has transmitted the response signals, of the transmitting and receiving units which have received the request signal from the first transmitting antenna and have transmitted the response signals, respectively, with a region corresponding to the left rear wheel of the vehicle, and associate the identification code other than the identification code associated with the region corresponding to the left rear wheel of the vehicle with a region corresponding to the left front wheel of the vehicle. The controller may further associate the identification code of the transmitting and receiving unit, which has received the request signals from the second and third transmitting antennas and has transmitted the response signals, of the transmitting and receiving units which have received the request signal from the third transmitting antenna and have transmitted the response signals, respectively, with a region corresponding to the right rear wheel of the vehicle, and associate the identification code other than the identification code associated with the region corresponding to the right rear wheel of the vehicle with a region corresponding to the right front wheel of the vehicle.

The present invention further provides a position detecting apparatus including transmitting and receiving units attached to at least two wheels of a vehicle, respectively, and a vehicle device provided for the vehicle, the vehicle device and the transmitting and receiving unit attached to each wheel communicating with each other via radio waves. The vehicle device includes a receiver for receiving signals from the transmitting and receiving units, a plurality of transmitting antennas for allowing communication in predetermined ranges, respectively, a memory for storing identification codes uniquely assigned to the respective transmitting and receiving units, and a controller for permitting the transmitting antennas to transmit signals and determining the positions of the transmitting and receiving units on the basis of signals received by the receiver. A first transmitting antenna, which is one of the transmitting antennas, is disposed so as to allow communication in a first range that accommodates the transmitting and receiving unit attached to a first wheel and the transmitting and receiving unit attached to a second wheel. A second transmitting antenna, which is one of the transmitting antennas, is disposed so as to allow communication in a second range that accommodates the transmitting and receiving unit attached to the first wheel and does not accommodate the transmitting and receiving unit attached to the second wheel. A third transmitting antenna, which is one of the transmitting antennas, is disposed so as to allow communication in a third range that does not accommodate the transmitting and receiving unit attached to the first wheel and the transmitting and receiving unit attached to the second wheel. The controller permits each of the transmitting antennas to transmit a request signal. Each transmitting and receiving unit which has received the request signal transmits a response signal containing information indicative of the identification code of the transmitting and receiving unit. The controller associates the identification code of the transmitting and receiving unit, which has not received the request signal from the second transmitting antenna, of the transmitting and receiving units which have not received the request signal from the third transmitting antenna with a region inside the first range and outside the second range, and associates the identification code other than the identification code associated with the region with a region shared by the first and second ranges.

In this position detecting apparatus, the transmitting and receiving units may be attached to a left front wheel, a left rear wheel, a right front wheel, and a right rear wheel, serving as four wheels of the vehicle, respectively. The first transmitting antenna may be disposed so as to allow communication in the first range that accommodates the transmitting and receiving units attached to the left front and left rear wheels of the vehicle. The second transmitting antenna may be disposed so as to allow communication in the second range that accommodates the transmitting and receiving units attached to the left rear and right rear wheels of the vehicle. The third transmitting antenna may be disposed so as to allow communication in the third range that accommodates the transmitting and receiving units attached to the right front and right rear wheels of the vehicle. The controller may associate the identification code of the transmitting and receiving unit, which has not received the request signal from the second transmitting antenna, of the transmitting and receiving units which have not received the request signal from the third transmitting antenna with a region corresponding to the left front wheel of the vehicle, and associate the identification code other than the identification code associated with the region corresponding to the left front wheel of the vehicle with a region corresponding to the left rear wheel of the vehicle. The controller may further associate the identification code of the transmitting and receiving unit, which has not received the request signal from the second transmitting antenna, of the transmitting and receiving units which have not received the request signal from the first transmitting antenna with a region corresponding to the right front wheel of the vehicle, and associate the identification code other than the identification code associated with the region corresponding to the right front wheel of the vehicle with a region corresponding to the right rear wheel of the vehicle.

The present invention further provides a position detecting apparatus including transmitting and receiving units attached to at least two wheels of a vehicle, respectively, and a vehicle device provided for the vehicle, the vehicle device and the transmitting and receiving unit attached to each wheel communicating with each other via radio waves. The vehicle device includes a receiver for receiving signals from the transmitting and receiving units, a plurality of transmitting antennas for allowing communication in predetermined ranges, respectively, a memory for storing identification codes uniquely assigned to the respective transmitting and receiving units, and a controller for permitting the transmitting antennas to transmit signals and determining the positions of the transmitting and receiving units on the basis of signals received by the receiver. A first transmitting antenna, which is one of the transmitting antennas, is disposed so as to allow communication in a first range that accommodates the transmitting and receiving unit attached to a first wheel and the transmitting and receiving unit attached to a second wheel. A second transmitting antenna, which is one of the transmitting antennas, is disposed so as to allow communication in a second range that accommodates the transmitting and receiving unit attached to the first wheel and does not accommodate the transmitting and receiving unit attached to the second wheel. A third transmitting antenna, which is one of the transmitting antennas, is disposed so as to allow communication in a third range that does not accommodate the transmitting and receiving unit attached to the first wheel and the transmitting and receiving unit attached to the second wheel. The controller permits each of the transmitting antennas to transmit a request signal. Each transmitting and receiving unit which has received the request signal transmits a response signal containing information indicative of the identification code of the transmitting and receiving unit. The controller associates the identification code of the transmitting and receiving unit, which has received the request signal from the second transmitting antenna, of the transmitting and receiving units which have not received the request signal from the third transmitting antenna with a region shared by the first and second ranges, and associates the identification code other than the identification code associated with the region with a region inside the first range and outside the second range.

In each of the position detecting apparatuses according to the present invention, it is unnecessary to provide a transmitting antenna for each wheel, thus achieving a simple configuration. In addition, since the position of each transmitting and receiving unit can be determined without measurement of signal intensity or the like, the design flexibility can be increased. Furthermore, the position of each transmitting and receiving unit can be simply determined on the basis of whether the unit has received a request signal, and processing for position determination can also be easily performed.

### BRIEF DESCRIPTION OF THE DRAWINGS

Fig. 1 is a diagram illustrating a configuration of a position detecting apparatus according to an embodiment of the present invention;
Fig. 2 is a diagram illustrating arrangement of components of the position detecting apparatus in a vehicle;
Figs. 3A and 3B illustrate a flowchart of an operation of determining the positions of transmitting and receiving units in a first mode;
Figs. 4A and 4B illustrate a flowchart of an operation of determining the positions of the transmitting and receiving units in a second mode; and
Figs. 5A and 5B illustrate a flowchart of an operation of determining the positions of the transmitting and receiving units in a third mode.

### DESCRIPTION OF THE PREFERRED EMBODIMENTS

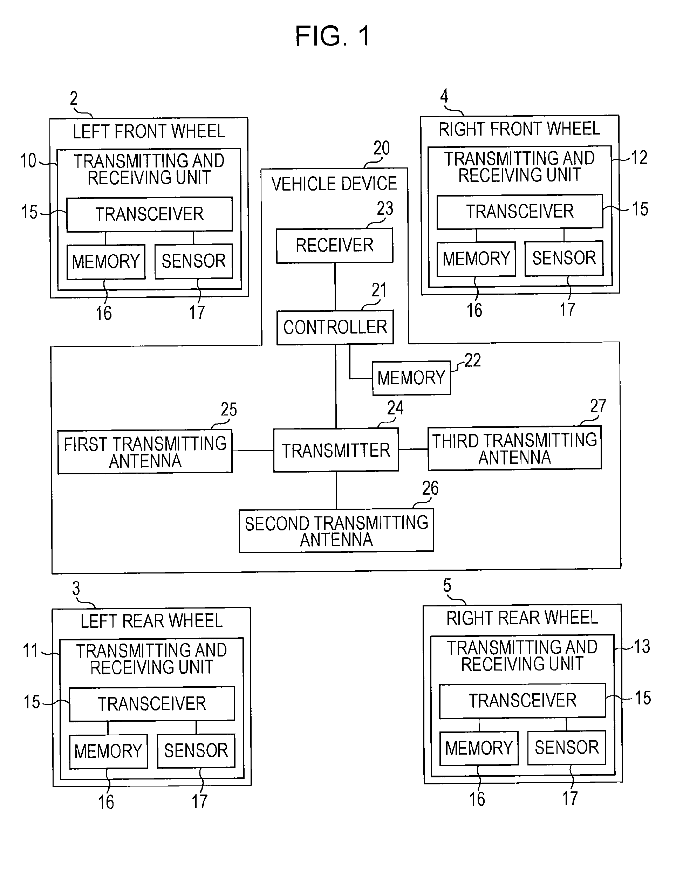

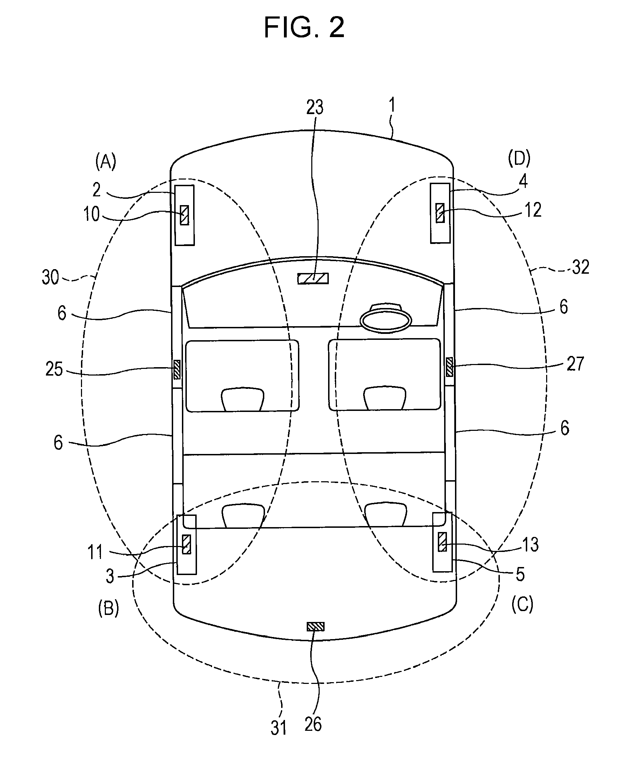

An embodiment of the present invention will be described in detail below with reference to the drawings. Fig. 1 illustrates a configuration of a position detecting apparatus according to the present embodiment. Fig. 2 illustrates arrangement of components of the position detecting apparatus in a vehicle. The position detecting apparatus according to the present embodiment is configured to determine the positions of transmitting and receiving units 10, 11, 12 and 13 in a vehicle 1 including four wheels 2, 3, 4, and 5, the transmitting and receiving units being attached to the wheels, respectively.

Referring to Fig. 1, the transmitting and receiving unit 10 is attached to the left front wheel 2, the transmitting and receiving unit 11 is attached to the left rear wheel 3, the transmitting and receiving unit 12 is attached to the right front wheel 4, and the transmitting and receiving unit 13 is attached to the right rear wheel 5. Each of the transmitting and receiving units 10, 11, 12, and 13 includes a transceiver 15 that communicates with the vehicle, a memory 16 that stores an identification code uniquely assigned to the transmitting and receiving unit, and a sensor 17 that detects air pressure in a tire constituting the wheel.

To communicate with the transmitting and receiving units 10 to 13, the vehicle 1 includes a vehicle device 20. The vehicle device 20 includes a controller 21 that communicates with the transmitting and receiving units 10 to 13 and performs, for example, a process for position determination, a memory 22 that stores, for example, the identification codes assigned to the transmitting and receiving units 10 to 13, a receiver 23 that receives response signals from the transmitting and receiving units 10 to 13, a transmitter 24 that transmits request signals to the transmitting and receiving units 10 to 13, a first transmitting antenna 25, a second transmitting antenna 26, and a third transmitting antenna 27. These antennas actually transmit the signals from the transmitter 24 via radio waves.

Referring to Fig. 2, the receiver 23 is disposed in a front area of the vehicle 1 so as to be positioned in the vicinity of the center of the vehicle. The receiver 23 may be disposed at another position as long as the receiver 23 can receive signals from all of the four transmitting and receiving units 10 to 13. The vehicle 1 includes a plurality of doors 6. The first transmitting antenna 25 is disposed in the left front door 6. The first transmitting antenna 25 enables radio waves of sufficient intensity for communication to penetrate a first range 30 indicated by a broken line in Fig. 2. The first range 30 includes the position of the transmitting and receiving unit 10 attached to the left front wheel 2 and that of the transmitting and receiving unit 11 attached to the left rear wheel 3 but does not include the position of the transmitting and receiving unit 12 attached to the right front wheel 4 and that of the transmitting and receiving unit 13 attached to the right rear wheel 5.

The second transmitting antenna 26 is disposed in a rear area of the vehicle 1 so as to be positioned on, for example, a rear bumper of the vehicle or in a trunk thereof. The second transmitting antenna 26 enables radio waves of sufficient intensity for communication to penetrate a second range 31 indicated by another broken line in Fig. 2. The second range 31 includes the position of the transmitting and receiving unit 11 attached to the left rear wheel 3 and that of the transmitting and receiving unit 13 attached to the right rear wheel 5 but does not include the position of the transmitting and receiving unit 10 attached to the left front wheel 2 and that of the transmitting and receiving unit 12 attached to the right front wheel 4.

The third transmitting antenna 27 is disposed in the right front door 6. The third transmitting antenna 27 enables radio waves of sufficient intensity for communication to penetrate a third range 32 indicated by another broken line in Fig. 2. The third range 32 includes the position of the transmitting and receiving unit 12 attached to the right front wheel 4 and that of the transmitting and receiving unit 13 attached to the right rear wheel 5 but does not include the position of the transmitting and receiving unit 10 attached to the left front wheel 2 and that of the transmitting and receiving unit 11 attached to the left rear wheel 3.

Since the transmitting antennas 25 to 27 are arranged as described above, the transmitting and receiving unit 10 attached to the left front wheel 2 is positioned in a region inside the first range 30 and outside the second range 31, the transmitting and receiving unit 11 attached to the left rear wheel 3 is positioned in a region shared by the first and second ranges 30 and 31, the transmitting and receiving unit 13 attached to the right rear wheel 5 is positioned in a region shared by the second and third ranges 31 and 32, and the transmitting and receiving unit 12 attached to the right front wheel 4 is positioned in a region inside the third range 32 and outside the second range 31.

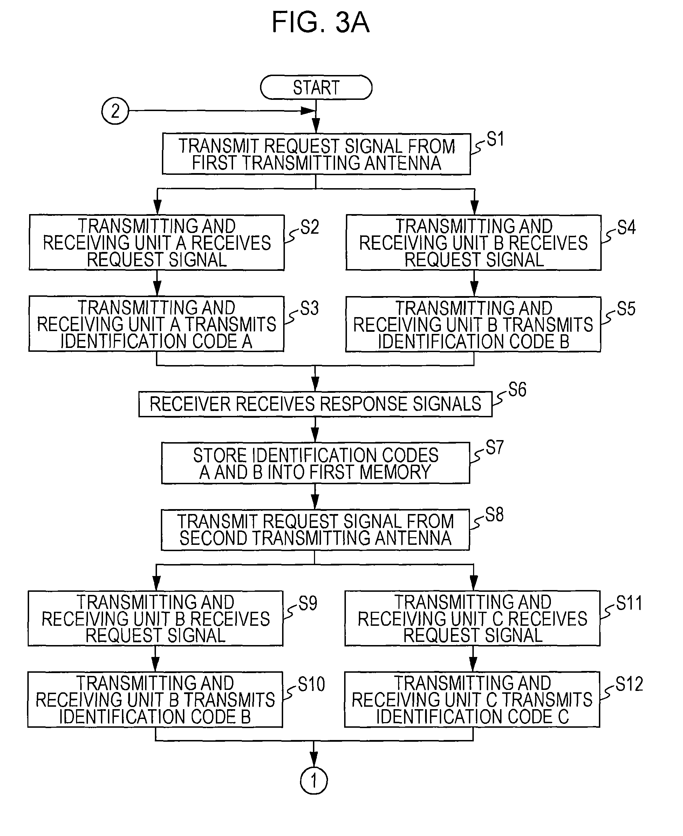

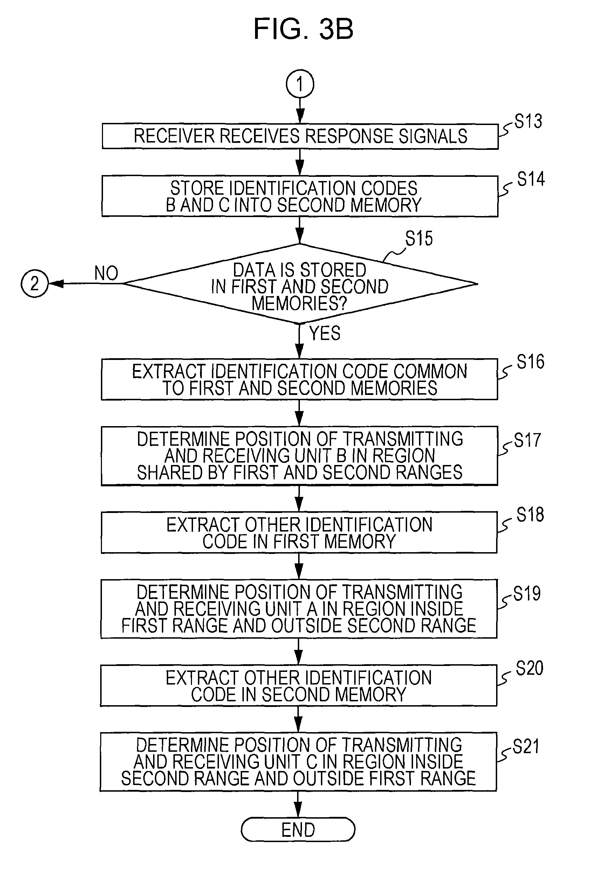

Operations of the position detecting apparatus with the above-described configuration and arrangement will be described below. Figs. 3A and 3B depict a flowchart of an operation of determining the positions of the transmitting and receiving units in a first mode. In this mode, the operation is performed to determine the position of the transmitting and receiving unit 10 attached to the left front wheel 2, that of the transmitting and receiving unit 11 attached to the left rear wheel 3, and that of the transmitting and receiving unit 13 attached to the right rear wheel 5. This operation is performed each time the ignition switch is operated to start the engine in the vehicle 1. The same applies to other modes.

First, the controller 21 permits the transmitter 24 to transmit a request signal from the first transmitting antenna 25 (S1). Each of request signals transmitted from the first transmitting antenna 25, the second transmitting antenna 26, and the third transmitting antenna 27 is a low frequency (LF) signal containing a predetermined wake-up signal and a command signal. The transmitting and receiving units 10 to 13 can receive the request signals in their corresponding ranges as illustrated in Fig. 2.

The request signal transmitted from the first transmitting antenna 25 is to be received by the transmitting and receiving units in the first range 30 as illustrated in Fig. 2. Accordingly, the two transmitting and receiving units will receive the request signal from the first transmitting antenna 25. Since the apparatus does not determine the positions of the transmitting and receiving units at this time, let A and B denote the transmitting and receiving units which have received the signal from the first transmitting antenna 25. For the sake of easy understanding, the finally specified transmitting and receiving units are designated by the reference numerals in Fig. 2.

When the transmitting and receiving unit A receives the request signal (S2), the transmitting and receiving unit A determines whether the wake-up signal is a predetermined signal. If it is the predetermined wake-up signal, the transmitting and receiving unit is activated from a sleep mode. The activated transmitting and receiving unit A transmits a response signal containing an identification code A uniquely assigned to the transmitting and receiving unit A (S3). The transmitting and receiving units, including the transmitting and receiving unit A, each transmit a radio frequency (RF) signal as a response signal. When the transmitting and receiving unit B receives the request signal (S4), the unit operates in the same way as the transmitting and receiving unit A until the unit B is activated. The activated transmitting and receiving unit B transmits a response signal containing an identification code B uniquely assigned to the transmitting and receiving unit B (S5). In the following description, it is assumed that each transmitting and receiving unit similarly operates after receiving a request signal until being activated.

If signal transmission in S3 and that in S5 are simultaneously performed, the receiver 23 cannot receive the signals. Accordingly, each transmitting and receiving unit determines the time to transmit a signal at random and transmits the signal more than once such that the vehicle device can receive the signal at least once. In the following description, it is assumed that each transmitting and receiving unit transmits a response signal in a manner similar to the above.

The receiver 23 receives the response signals from the transmitting and receiving units (S6). The controller 21 then stores the identification codes A and B contained in the received signals into a first memory constituting the memory 22 (S7). The memory 22 in the vehicle device 20 includes the first memory, a second memory, and a third memory. These memories may be physically separated memories or different address areas in the same physical memory.

Subsequently, the controller 21 permits the transmitter 24 to transmit a request signal from the second transmitting antenna 26 (S8). The request signal transmitted from the second transmitting antenna 26 is to be received by the transmitting and receiving units in the second range 31 as illustrated in Fig. 2. In this case, the transmitting and receiving unit B receives the request signal (S9) and transmits a response signal containing the identification code B (S10). Furthermore, the transmitting and receiving unit C receives the request signal (S11) and transmits a response signal containing an identification code C (S12).

The receiver 23 receives the response signals (S13). The controller 21 then stores the identification codes B and C contained in the received signals into the second memory (S14). Subsequently, the controller 21 determines whether data is stored in the first and second memories (S15). If data is stored in the memories, the controller 21 proceeds to the next step. If data is not stored, the controller 21 returns to S1.

The controller 21 will determine the positions of the transmitting and receiving units on the basis of information stored in the memory 22. First, the controller 21 extracts the identification code common to the first and second memories (S16). The first memory has stored the identification codes of the transmitting and receiving units which have received the signal from the first transmitting antenna 25. The second memory has stored the identification codes of the transmitting and receiving units which have received the signal from the second transmitting antenna 26. Accordingly, the position of the transmitting and receiving unit relevant to the common identification code is specified in the region shared by the first range 30 and the second range 31. In this case, since the identification code B is stored in the two memories, the controller 21 associates the identification code B with the region shared by the first range 30 and the second range 31 and determines that the transmitting and receiving unit B is positioned in the left rear wheel 3 (S17).

After that, the controller 21 extracts the identification code other than that extracted in S16 of the identification codes stored in the first memory (S18). The transmitting and receiving unit relevant to the identification code is specified as being positioned inside the first range 30 and outside the second range 31. Since the identification code A is the other identification code, the controller 21 associates the identification code A with the region inside the first range 30 and outside the second range 31 and determines that the transmitting and receiving unit A is positioned in the left front wheel 2 (S19).

The controller 21 extracts the identification code other than that extracted in S16 from the second memory (S20). The transmitting and receiving unit relevant to this identification code is specified as being positioned inside the second range 31 and outside the first range 30. Since the identification code C is the other identification code, the controller 21 associates the identification code C with a region inside the second range 31 and outside the first range 30 and determines that the transmitting and receiving unit C is positioned in the right rear wheel 5 (S21). Then, determination of the positions terminates.

In the first mode, it is assumed that at least the positions of the transmitting and receiving unit 10 in the left front wheel 2 and the transmitting and receiving unit 11 in the left rear wheel 3 are determined. In this case, therefore, determination of the position of the transmitting and receiving unit 13 which is disposed in the right rear wheel 5 (S20 and S21) may be omitted.

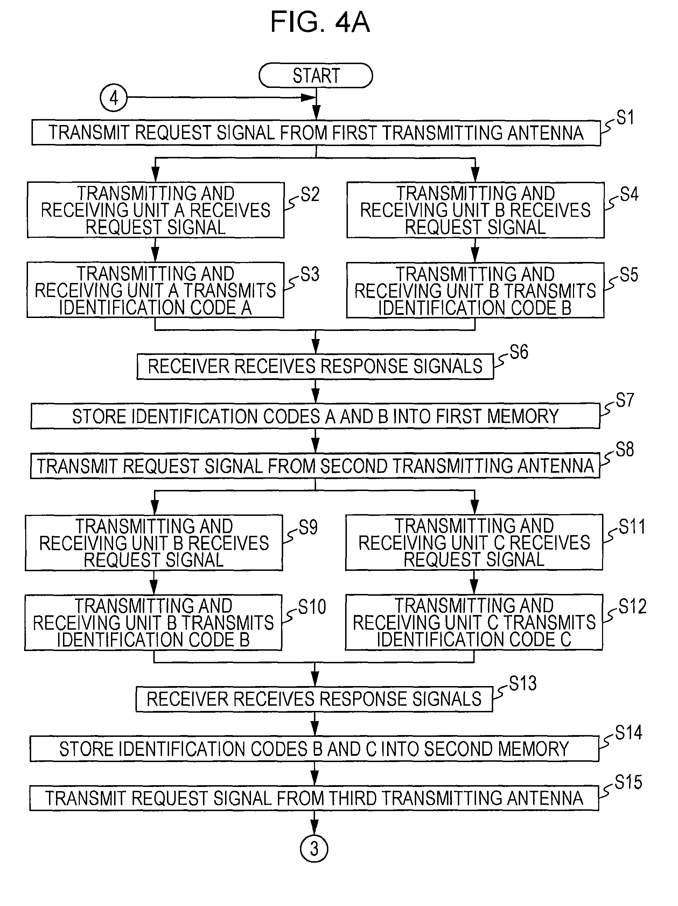

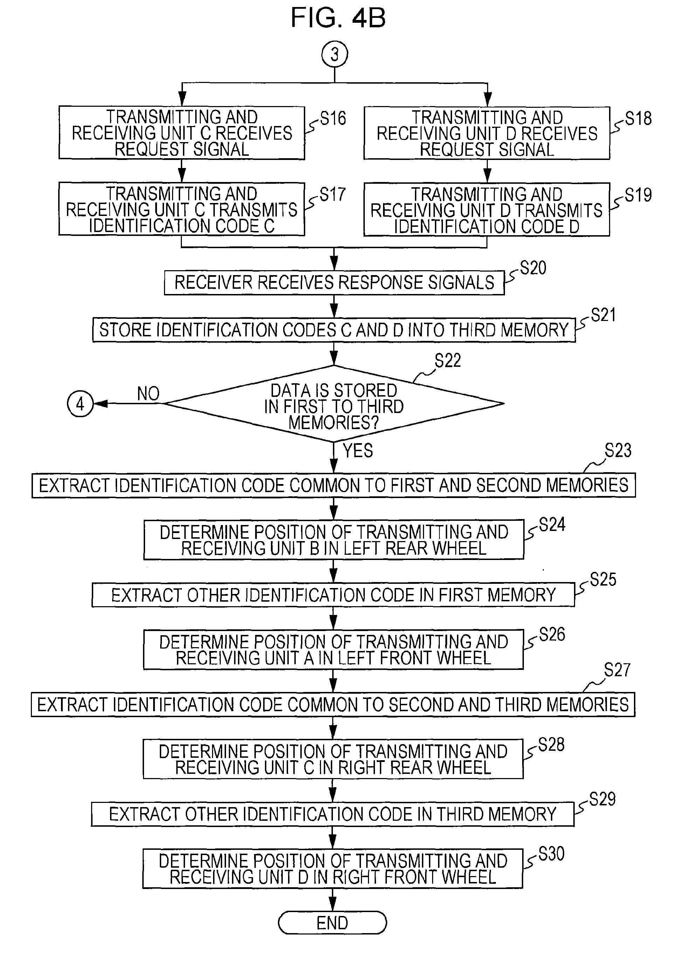

Figs. 4A and 4B depict a flowchart of an operation of determining the positions of the transmitting and receiving units in a second mode. In this mode, the positions of all of the four transmitting and receiving units may be determined. In the operation in this mode, since processing in S1 to S14 for transmission and reception of a signal from the first transmitting antenna 25 and transmission and reception of a signal from the second transmitting antenna 26 is the same as that in the first mode, description thereof is omitted.

After processing related to the second transmitting antenna 26, the controller 21 permits the transmitter 24 to transmit a request signal from the third transmitting antenna 27 (S15). The request signal transmitted from the third transmitting antenna 27 is to be received by the transmitting and receiving units in the third range 32 as illustrated in Fig. 2. In this case, the transmitting and receiving unit C receives the request signal (S16) and transmits a response signal containing the identification code C (S17). Furthermore, the transmitting and receiving unit D receives the request signal (S18) and transmits a response signal containing an identification code D (S19).

The receiver 23 receives the response signals (S20). The controller 21 then stores the identification codes C and D contained in the received signals into the third memory (S21). Subsequently, the controller 21 determines whether data is stored in the first to third memories (S22). If data is stored in the memories, the controller 21 proceeds to the next step. If data is not stored, the controller 21 returns to S1.

In S23 and the subsequent steps, the controller 21 will determine the positions of the transmitting and receiving units. First, the controller 21 extracts the identification code common to the first and second memories (S23), associates the relevant identification code B with the region shared by the first range 30 and the second range 31, and determines that the transmitting and receiving unit B is positioned in the left rear wheel 3 (S24). Subsequently, the controller 21 extracts the identification code other than that extracted in S23 of the identification codes stored in the first memory (S25), associates the relevant identification code A with the region inside the first range 30 and outside the second range 31, and determines that the transmitting and receiving unit A is positioned in the left front wheel 2 (S26).

As described above, the controller 21 has determined the positions of the transmitting and receiving units relative to the left wheels 2 and 3 on the basis of the response signals related to the request signals from the first and second transmitting antennas 25 and 26 in the above-described manner. The controller 21 will determine the positions of the transmitting and receiving units relative to the right wheels 4 and 5 on the basis of the response signals related to the request signals from the second and third transmitting antennas 26 and 27 in the same manner.

First, the controller 21 extracts the identification code common to the second and third memories (S27), associates the relevant identification code C with the region shared by the second range 31 and the third range 32, and determines that the transmitting and receiving unit C is positioned in the right rear wheel 5 (S28). Subsequently, the controller 21 extracts the identification code other than that extracted in S27 of the identification codes stored in the third memory (S29), associates the relevant identification code D with a region inside the third range 32 and outside the second range 31, and determines that the transmitting and receiving unit D is positioned in the right front wheel 4 (S30). Then, determination of the positions terminates.

In the position determining operation in each of the first and second modes, the transmitting and receiving unit positioned in the region shared by the first and second ranges 30 and 31 is specified on the basis of from which transmitting antenna each transmitting and receiving unit has received a signal. The other transmitting and receiving unit is determined as being positioned inside the first range 30 and outside the second range 31. In the second mode, similar determination is performed with respect to the second and third ranges 31 and 32. It is therefore unnecessary to provide a transmitting antenna for each wheel. In addition, the position of each transmitting and receiving unit can be determined without signal intensity measurement. Thus, the design flexibility can be increased. Furthermore, processing for position determination can be easily performed on the basis of information stored in the memory 22. Although the positions of the three transmitting and receiving units have been determined in the first mode and the positions of the four transmitting and receiving units have been determined in the second mode, only the necessary position of the transmitting and receiving unit may be specified as requested.

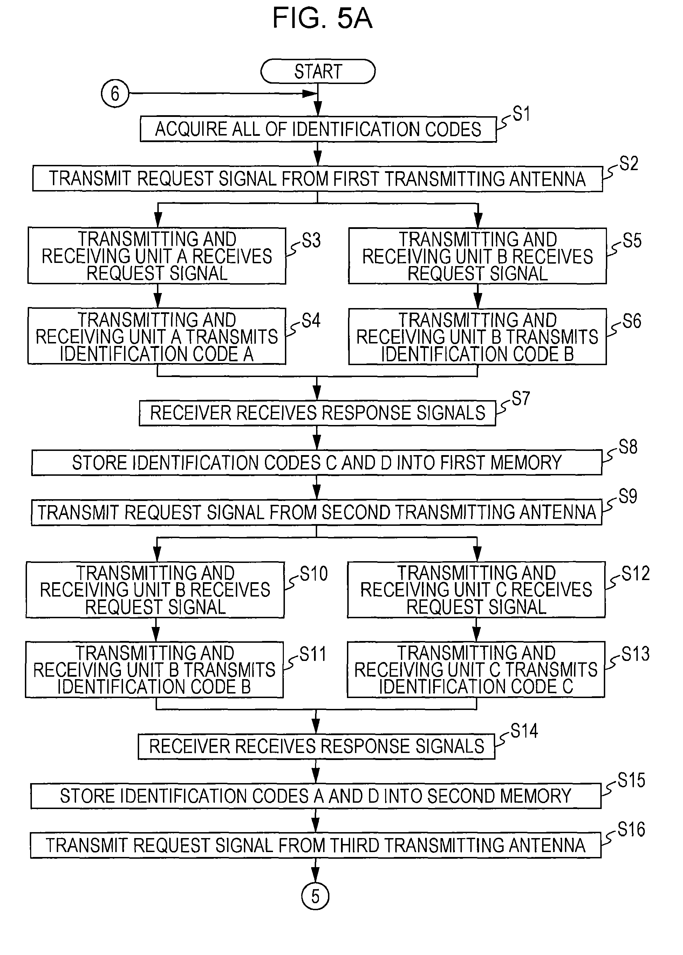

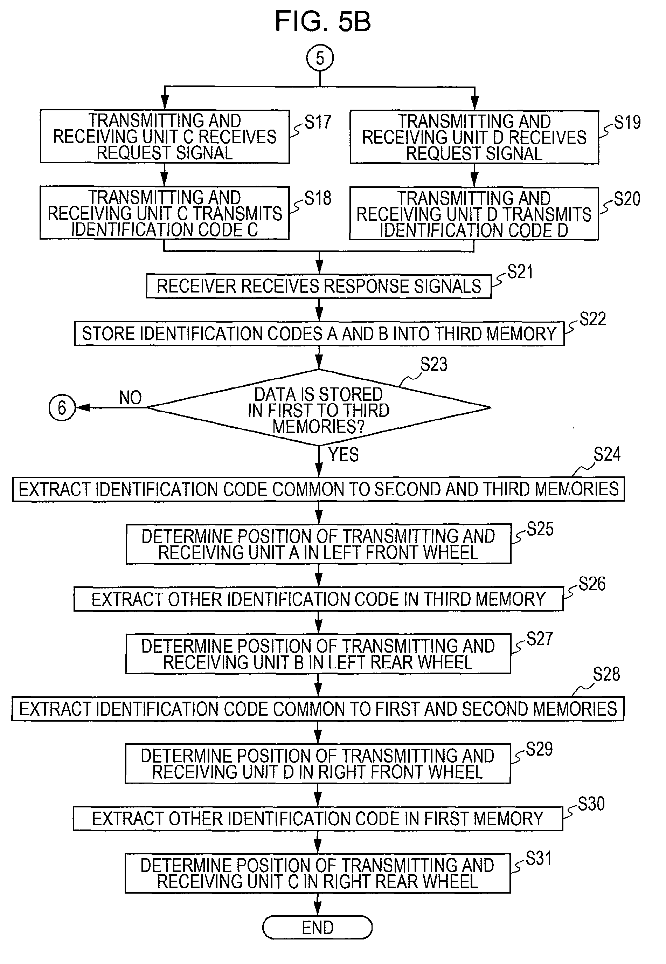

In the position determining operation in each of the first and second modes, the positions of transmitting and receiving units are determined on the basis of the identification codes of the transmitting and receiving units which have received the signals from the transmitting antennas. On the contrary, the positions of transmitting and receiving units may be determined on the basis of the identification codes of the transmitting and receiving units which have not receive signals from the transmitting antennas. Such a position determining operation will now be described as an operation in a third mode. Figs. 5A and 5B depict a flowchart of the operation of determining the positions of the transmitting and receiving units in the third mode. In this mode, the positions of all of the four transmitting and receiving units may be determined.

In the third mode, the controller 21 first acquires the identification codes of all of the transmitting and receiving units (S1). To acquire the identification codes of all of the transmitting and receiving units, request signals may be transmitted from the first and third transmitting antennas 25 and 27. Thus, the request signals are transmitted to all of the transmitting and receiving units and the respective transmitting and receiving units transmit response signals each containing the identification code. The receiver 23 receives the response signals from the four transmitting and receiving units. The identification codes A to D are stored into the memory 22.

Processing in S2 to S7 is the same as that in S1 to S6 in the second mode. Specifically, a request signal is transmitted from the first transmitting antenna 25 and response signals, each containing the identification code, from the transmitting and receiving units A and B are received. In this case, the controller 21 stores not the identification codes contained in the received response signals but the identification codes C and D, which are not contained in the received response signals, of the identification codes acquired in S1 into the first memory (S8). This means that the stored identification codes correspond to the transmitting and receiving units which have not received the request signal from the first transmitting antenna 25 and these transmitting and receiving units are positioned outside the first range 30.

Processing in S9 to S14 is the same as that in S8 to S13 in the second mode.

Specifically, a request signal is transmitted from the second transmitting antenna 26 and response signals, each containing the identification code, from the transmitting and receiving units B and C are received. In this case, the controller 21 stores the identification codes A and D, which are not contained in the received response signals, of the identification codes acquired in S1 into the second memory (S15). This means that the stored identification codes correspond to the transmitting and receiving units which have not received the request signal from the second transmitting antenna 26 and these transmitting and receiving units are positioned outside the second range 31.

Processing in S16 to S21 is the same as that in S15 to S20 in the second mode. Specifically, a request signal is transmitted from the third transmitting antenna 27 and response signals, each containing the identification code, from the transmitting and receiving units C and D are received. In this case, the controller 21 stores the identification codes A and B, which are not contained in the received response signals, of the identification codes acquired in S1 into the third memory (S22). This means that the stored identification codes correspond to the transmitting and receiving units which have not received the request signal from the third transmitting antenna 27 and these transmitting and receiving units are positioned outside the third range 32. Subsequently, the controller 21 determines whether data is stored in the first to third memories (S23). If data is stored, the controller 21 proceeds to the next step. If data is not stored, the controller 21 returns to S1.

Next, the controller 21 will determine the positions of the transmitting and receiving units on the basis of information stored in the memory 22. First, the controller 21 extracts the identification code common to the second and third memories (S24). The third memory has stored the identification codes of the transmitting and receiving units which have not received the request signal from the third transmitting antenna 27, namely, the transmitting and receiving units 10 and 11 arranged outside the third range 32. The second memory has stored the identification codes of the transmitting and receiving units which have not received the request signal from the second transmitting antenna 26, namely, the transmitting and receiving units 10 and 12 arranged outside the second range 31. Accordingly, the identification code A common to the second and third memories is specified as that of the transmitting and receiving unit 10 positioned in the left front wheel 2 (S25).

The controller 21 extracts the identification code other than the identification code A, related to the specified position, of the identification codes stored in the third memory, namely, the identification code B (S26). Since this identification code is related to the other transmitting and receiving unit positioned on the left of the vehicle, this identification code is specified as that of the transmitting and receiving unit 11 positioned in the left rear wheel 3 (S27).

Subsequently, the controller 21 extracts the identification code common to the first and second memories (S28). The first memory has stored the identification codes of the transmitting and receiving units 12 and 13 which have not received the request signal from the first transmitting antenna 25, namely, the transmitting and receiving units arranged outside the first range 30. The second memory has stored the identification codes of the transmitting and receiving units which have not received the request signal from the second transmitting antenna 26, namely, the transmitting and receiving units 10 and 12 arranged outside the second range 31. Accordingly, the identification code D common to these memories is specified as that of the transmitting and receiving unit 12 positioned in the right front wheel 4 (S29).

The controller 21 extracts the identification code other than the identification code D, related to the specified position, of the identification codes stored in the first memory, namely, the identification code C (S30). Since this identification code is related to the other transmitting and receiving unit positioned on the right of the vehicle, this identification code is specified as that of the transmitting and receiving unit 13 positioned in the right rear wheel 5 (S31). The flow of position determination then terminates.

As described above, since the identification codes of all of the transmitting and receiving units are acquired in advance, the transmitting and receiving units which have not received a request signal from any transmitting antenna can be specified and the positions of the transmitting and receiving units can be determined, thus obtaining the same advantages as those obtained in the case where the transmitting and receiving units which have received a request signal are specified and the positions are determined. In the third mode, the identification codes of the transmitting and receiving units which have not received a request signal from each of the three transmitting antennas have been stored into the memory. The positions of the transmitting and receiving units can be determined on the basis of data regarding the transmitting and receiving units which have not received a request signal and data regarding the transmitting and receiving units which have received a request signal. For example, regarding transmission from the second transmitting antenna 26, the identification codes of the transmitting and receiving units B and C which have received the request signal from the second transmitting antenna 26 may be stored into the memory.

In the above-described embodiment, the first, second, and third ranges 30, 31, and 32 each mean an area where the transmitting and receiving units arranged in the range receive a signal from the corresponding one of the first, second, and third transmitting antennas 25, 26, and 27 at such an intensity that the unit can detect the signal as a predetermined request signal. If the transmitting and receiving unit has received a request signal having an intensity below a predetermined level, it can be determined that the unit has not received the request signal. In this case, the first, second, and third ranges 30, 31, and 32 each mean an area where the transmitting and receiving units in the range can receive a signal having an intensity at or above the predetermined level from the corresponding transmitting antenna.

While the embodiment of the present invention has been described above, application of the present invention is not limited to the embodiment and various changes and modifications thereof could be made without departing from the technical spirit and scope of the present invention.

## Claims

1. A position detecting apparatus comprising:
transmitting and receiving units (10, 11, 12, 13) attached to at least two wheels of a vehicle (1), respectively; and
a vehicle device (20) provided for the vehicle, the vehicle device and the transmitting and receiving unit attached to each wheel communicating with each other via radio waves, wherein
the vehicle device (20) includes
a receiver (23) for receiving signals from the transmitting and receiving units,
a plurality of transmitting antennas for allowing communication in predetermined ranges, respectively,
a memory (22) for storing identification codes uniquely assigned to the respective transmitting and receiving units, and
a controller (21) for permitting the transmitting antennas to transmit signals and determining the positions of the transmitting and receiving units (10, 11, 12, 13) on the basis of signals received by the receiver (23),
a first transmitting antenna (25), which is one of the transmitting antennas, is disposed so as to allow communication in a first range (30) that accommodates the transmitting and receiving unit (11) attached to a first wheel and the transmitting and receiving unit (10) attached to a second wheel, a second transmitting antenna (26), which is one of the transmitting antennas, is disposed so as to allow communication in a second range (31) that accommodates the transmitting and receiving unit attached to the first wheel and does not accommodate the transmitting and receiving unit attached to the second wheel,
the controller (21) permits each of the transmitting antennas to transmit a request signal, each transmitting and receiving unit which has received the request signal transmits a response signal containing information indicative of the identification code of the transmitting and receiving unit, and
the controller (21) associates the identification code of the transmitting and receiving unit (11), which has received the request signals from the first and second transmitting antennas (25, 26) and has transmitted the response signals, of the transmitting and receiving units (10, 11) which have received the request signal from the first transmitting antenna (25) and have transmitted the response signals, respectively, with a region shared by the first and second ranges (30, 31), and associates the identification code other than the identification code associated with the region with a region inside the first range and outside the second range.

2. The apparatus according to Claim 1, wherein
the transmitting and receiving units (10, 11, 12, 13) are attached to a left front wheel (2), a left rear wheel (3), a right front wheel (4), and a right rear wheel (5), serving as four wheels of the vehicle (1), respectively,
the first transmitting antenna (25) is disposed so as to allow communication in the first range (30) that accommodates the transmitting and receiving units (10, 11) attached to the left front and left rear wheels (2, 3) of the vehicle, the second transmitting antenna (26) is disposed so as to allow communication in the second range (31) that accommodates the transmitting and receiving units (11, 13) attached to the left rear and right rear wheels (3, 5) of the vehicle, a third transmitting antenna (27), which is one of the transmitting antennas, is disposed so as to allow communication in a third range (32) that accommodates the transmitting and receiving units (12, 13) attached to the right front and right rear wheels (4, 5) of the vehicle,
the controller (21) associates the identification code of the transmitting and receiving unit (11), which has received the request signals from the first and second transmitting antennas (25, 26) and has transmitted the response signals, of the transmitting and receiving units (10, 11) which have received the request signal from the first transmitting antenna (25) and have transmitted the response signals, respectively, with a region corresponding to the left rear wheel (3) of the vehicle (1), and associates the identification code other than the identification code associated with the region corresponding to the left rear wheel of the vehicle with a region corresponding to the left front wheel (2) of the vehicle, and
the controller (21) further associates the identification code of the transmitting and receiving unit (13), which has received the request signals from the second and third transmitting antennas (26, 27) and has transmitted the response signals, of the transmitting and receiving units (12, 13) which have received the request signal from the third transmitting antenna (27) and have transmitted the response signals, respectively, with a region corresponding to the right rear wheel (5) of the vehicle (1), and associates the identification code other than the identification code associated with the region corresponding to the right rear wheel of the vehicle with a region corresponding to the right front wheel (4) of the vehicle.

3. A position detecting apparatus comprising:
transmitting and receiving units (10, 11, 12, 13) attached to at least two wheels of a vehicle (1), respectively; and
a vehicle device (20) provided for the vehicle, the vehicle device and the transmitting and receiving unit attached to each wheel communicating with each other via radio waves, wherein
the vehicle device (20) includes
a receiver (23) for receiving signals from the transmitting and receiving units,
a plurality of transmitting antennas for allowing communication in predetermined ranges, respectively,
a memory (22) for storing identification codes uniquely assigned to the respective transmitting and receiving units, and
a controller (21) for permitting the transmitting antennas to transmit signals and determining the positions of the transmitting and receiving units (10, 11, 12, 13) on the basis of signals received by the receiver (23),
a first transmitting antenna (25), which is one of the transmitting antennas, is disposed so as to allow communication in a first range (30) that accommodates the transmitting and receiving unit (11) attached to a first wheel and the transmitting and receiving unit (10) attached to a second wheel, a second transmitting antenna (26), which is one of the transmitting antennas, is disposed so as to allow communication in a second range (31) that accommodates the transmitting and receiving unit attached to the first wheel and does not accommodate the transmitting and receiving unit attached to the second wheel, a third transmitting antenna (27), which is one of the transmitting antennas, is disposed so as to allow communication in a third range (32) that does not accommodate the transmitting and receiving unit attached to the first wheel and the transmitting and receiving unit attached to the second wheel,
the controller (21) permits each of the transmitting antennas to transmit a request signal, each transmitting and receiving unit which has received the request signal transmits a response signal containing information indicative of the identification code of the transmitting and receiving unit, and
the controller (21) associates the identification code of the transmitting and receiving unit (10), which has not received the request signal from the second transmitting antenna (26), of the transmitting and receiving units (10, 11) which have not received the request signal from the third transmitting antenna (27) with a region inside the first range (30) and outside the second range (31), and associates the identification code other than the identification code associated with the region with a region shared by the first and second ranges.

4. The apparatus according to Claim 3, wherein
the transmitting and receiving units (10, 11, 12, 13) are attached to a left front wheel (2), a left rear wheel (3), a right front wheel (4), and a right rear wheel (5), serving as four wheels of the vehicle (1), respectively,
the first transmitting antenna (25) is disposed so as to allow communication in the first range (30) that accommodates the transmitting and receiving units (10, 11) attached to the left front and left rear wheels (2, 3) of the vehicle, the second transmitting antenna (26) is disposed so as to allow communication in the second range (31) that accommodates the transmitting and receiving units (11, 13) attached to the left rear and right rear wheels (3, 5) of the vehicle, the third transmitting antenna (27) is disposed so as to allow communication in the third range (32) that accommodates the transmitting and receiving units (12, 13) attached to the right front and right rear wheels (4, 5) of the vehicle,
the controller (21) associates the identification code of the transmitting and receiving unit (10), which has not received the request signal from the second transmitting antenna (26), of the transmitting and receiving units (10, 11) which have not received the request signal from the third transmitting antenna (27) with a region corresponding to the left front wheel (2) of the vehicle (1), and associates the identification code other than the identification code associated with the region corresponding to the left front wheel of the vehicle with a region corresponding to the left rear wheel (3) of the vehicle, and
the controller (21) further associates the identification code of the transmitting and receiving unit (12), which has not received the request signal from the second transmitting antenna (26), of the transmitting and receiving units (12, 13) which have not received the request signal from the first transmitting antenna (25) with a region corresponding to the right front wheel (4) of the vehicle (1), and associates the identification code other than the identification code associated with the region corresponding to the right front wheel of the vehicle with a region corresponding to the right rear wheel (5) of the vehicle.

5. A position detecting apparatus comprising:
transmitting and receiving units (10, 11, 12, 13) attached to at least two wheels of a vehicle (1), respectively; and
a vehicle device (20) provided for the vehicle, the vehicle device and the transmitting and receiving unit attached to each wheel communicating with each other via radio waves, wherein
the vehicle device (20) includes
a receiver (23) for receiving signals from the transmitting and receiving units,
a plurality of transmitting antennas for allowing communication in predetermined ranges, respectively,
a memory (22) for storing identification codes uniquely assigned to the respective transmitting and receiving units, and
a controller (21) for permitting the transmitting antennas to transmit signals and determining the positions of the transmitting and receiving units (11, 12, 13, 14) on the basis of signals received by the receiver (23),
a first transmitting antenna (25), which is one of the transmitting antennas, is disposed so as to allow communication in a first range (30) that accommodates the transmitting and receiving unit (11) attached to a first wheel and the transmitting and receiving unit (10) attached to a second wheel, a second transmitting antenna (26), which is one of the transmitting antennas, is disposed so as to allow communication in a second range (31) that accommodates the transmitting and receiving unit attached to the first wheel and does not accommodate the transmitting and receiving unit attached to the second wheel, a third transmitting antenna (27), which is one of the transmitting antennas, is disposed so as to allow communication in a third range (32) that does not accommodate the transmitting and receiving unit attached to the first wheel and the transmitting and receiving unit attached to the second wheel,
the controller (21) permits each of the transmitting antennas to transmit a request signal, each transmitting and receiving unit which has received the request signal transmits a response signal containing information indicative of the identification code of the transmitting and receiving unit, and
the controller (21) associates the identification code of the transmitting and receiving unit (11), which has received the request signal from the second transmitting antenna (26), of the transmitting and receiving units (10, 11) which have not received the request signal from the third transmitting antenna (27) with a region shared by the first and second ranges (30, 31), and associates the identification code other than the identification code associated with the region with a region inside the first range and outside the second range.
